Europäisches Patentamt

European Patent Office

Office européen des brevets

(19)

(11) Publication number : **0 587 405 A2**

(12) # EUROPEAN PATENT APPLICATION

(21) Application number : **93307053.4**

(22) Date of filing : **07.09.93**

(51) Int. Cl.⁵ : **G01V 1/40**

(30) Priority : **10.09.92 US 943352**

(43) Date of publication of application :
**16.03.94 Bulletin 94/11**

(84) Designated Contracting States :
**DE FR GB IT NL**

(71) Applicant : **HALLIBURTON COMPANY**
**P.O. Drawer 1431**
**Duncan Oklahoma 73536 (US)**

(72) Inventor : **Venditto, James J.**
**2902 Wild Oak**
**Duncan, Oklahoma 73533 (US)**
Inventor : **Blauch, Mathew E.**
**1125 Grand Blvd.**
**Duncan, Oklahoma 73533 (US)**
Inventor : **Kessler, Calvin W.**
**14623 Kellywood**
**Houston, Texas 77079 (US)**

(74) Representative : **Goodenough, Nigel et al**
**A.A. Thornton & Co. Northumberland House**
**303-306 High Holborn**
**London WC1V 7LE (GB)**

(54) **Acoustic well logging method.**

(57)    An acoustic logging method for detecting mechanical anisotropy of a hydrocarbon bearing formation (28) transversed by a well (14) comprises transmitting acoustic signals at different azimuths about a longitudinal axis of the well (14) ; and receiving from the different azimuths in the well respective signals responsive to different waves produced in the hydrocarbon bearing formation (28) in response to the transmitted signals and tectonic stress in the hydrocarbon bearing formation. Suitably, the received azimuthal signals have waveforms responsive to compression, shear and Stonely waves. From the data so obtained, elastic moduli and Poisson's ratio can be determined to show variations in horizontal stress and strain in the formation about the well bore. This information can be used to predict the orientation of hydraulic fractures and other directional properties of the formation (28).

FIG. 1

EP 0 587 405 A2

Jouve, 18, rue Saint-Denis, 75001 PARIS

This invention relates to an acoustic logging method for detecting mechanical anisotropy in the earth surrounding a well, particularly an oil or gas well.

A commonly utilized technique for stimulating the production of hydrocarbons from a subterranean rock formation penetrated by a well bore is to create and extend fractures in the formation. Generally, the fractures are created by applying hydraulic pressure on the formation from the well bore. That is, a fracturing fluid is pumped through the well bore and into the formation at a rate and pressure such that the resultant hydraulic force exerted on the formation causes one or more fractures to be created. The fractures are extended by continued pumping; and the fractures can be propped open or flow channels can be etched in the faces of the fractures with acid, or both can be done, to provide openings in the formation through which hydrocarbons more readily flow to the well bore. Fracturing is also utilized in carrying out enhanced production procedures in subterranean formations (e.g., water flooding from an injection well to a production well) as well as in other applications.

In designing fracturing treatments to be carried out in subterranean rock formations, it is often necessary and always desirable to know the direction in which fractures will extend in the formation and other directional fracture related characteristics such as in situ rock elastic moduli, in situ stresses, etc Such knowledge enables more efficient reservoir management. For example, knowing such directional information allows one to better place production wells for maximizing production from the reservoir of hydrocarbons in the subterranean formation and to better place waterflood injection wells for increasing waterflood sweep efficiency by avoiding an injection well arrangement that would cause premature breakthrough of the injected fluid into the producing well.

The desired directional information can be obtained from stress and strain data about the geology in the formation. The stresses and strains of the geology typically are not the same in different directions about the longitudinal axis of a well. That is, the geology exhibits mechanical (or elastic) anisotropy. This can be naturally caused such as by superimposed regional tectonic stress, whether currently acting or paleotectonic stress (which may or may not be of the same orientation), that imparts an imprint into the rock; and mechanical anisotropy can be induced such as by hydraulic pressure exerted by fluid pumped into the well.

Heretofore, the fracture direction and other subterranean rock formation characteristics have been determined or attempted to be determined by analyzing core samples from the formation. For example, United States patent specification number 4,529,036 (Daneshy et al.) describes a method of determining the orientation of a fracture or fractures created in a subterranean formation. In accordance with that method, the formation is hydraulically fractured at the lower end portion of the well bore and an azimuthally oriented core containing a portion of the fracture is removed from beneath the bottom of the well bore. An inspection of the core coupled with a knowledge of its orientation in the well bore are used to determine the direction of hydraulically induced fractures in the formation. While the method of Daneshy et al. has been utilized successfully for determining fracture direction, it is relatively time consuming and expensive as a result of the necessity of removing and testing a core, it does not provide other fracture related characteristics of the formation such as those described above, and fracturing information is only obtainable at the conclusion of the test. Further, if the fracturing procedure is unsuccessful, the coring operation and the testing of the core are performed without knowledge of whether the core does or does not contain a fracture. Additionally, removing and externally testing a core sample can change the stress and strain characteristics of the sample.

More recently, tools have been developed for measuring the in situ enlargements of a well bore caused by pressure exerted on the formation. Such a tool is described in United States patent specification number 4,673,890 (Copland et al.).In the use of the tool, it is connected to a string of pipe and lowered in the well bore to a point adjacent a particular subterranean formation. The tool is isolated and locked in the well bore and increasing pressure is applied to the formation to a pressure level whereby the rock formation adjacent the tool fractures As the pressure is being increased, the tool measures incremental diametral displacements of the well bore which are processed and recorded. The tool and the measurements are azimuthally oriented and the measurements are utilized to determine the direction of the fracture or fractures created in the formation.

Our European patent application number 93304727.6 discloses a method for using a tool such as the tool, described in United States patent specification no. 4,673,890 to detect and measure in situ elastic anisotropy in a subterranean rock formation in addition to determining fracture direction and fracture width as a function of time and pressure. The detection and measurement of elastic anisotropy allows the calculation of directional in situ rock elastic moduli, the comparison of anisotropy to current in situ stress direction and the investigation of potential anelastic formation anisotropies through pressure cycling. A comparison of the principle directions of the in situ moduli with those of the in situ stresses found from hydraulic fracture direction can provide insight into the history of the stress field. Such information is used for designing subsequent fracture treatments, for making realistic and accurate fracture models and for aiding in the understanding of the geology, geophysical characteristics and/or stress orientations of a region.

Halliburton Logging Services, Inc. (HLS) has an acoustic logging tool which makes six compression wave travel time measurements at 600 intervals around the circumference of the tool. These measurements are made using six "pads" attached to six radially adjustable arms, wherein each pad has an acoustic transmitter and one or two receivers. Although the tool can be moved longitudinally in the well to log at different locations, the measured compression wave travel time allows for only limited analysis of mechanical anisotropy.

Another prior acoustic logging tool can respond to compression, shear and Stonely waves produced in the formation in response to a transmitted acoustic signal, but this type of tool is omnidirectional (i.e., it is not sensitive to and does not provide discrete directional signals).

Although core samples can be extracted and tested out of the well and although in situ testing can be done via diametral measurements or limited acoustic analysis, there is the need for an improved acoustic logging method for a well, which method enables further analysis of mechanical anisotropy beyond what the aforementioned HLS tool can provide and yet which method retains the ability to do so both at different azimuths within the well and at different longitudinal locations in the well on a continuous logging basis. There is also the need for a method for detecting mechanical anisotropy that combines both in situ logging and core sample extraction and a comparison therebetween for distinguishing natural mechanical anisotropy and induced mechanical anisotropy.

We have now devised an improved directional acoustic logging method for detecting mechanical anisotropy in the earth surrounding a well, particularly an oil or gas well, whereby problems in prior art procedures are mitigated or overcome.

According to the present invention, there is provided an acoustic logging method for detecting mechanical anisotropy of a hydrocarbon bearing formation traversed by a well, which method comprises lowering an acoustic logging tool into the well: transmitting, from the acoustic logging tool into the hydrocarbon bearing formation, respective acoustic signals at different azimuths about a longitudinal axis of the well; receiving in the acoustic logging tool from the different azimuths about the longitudinal axis of the well respective signals responsive to different waves produced in the hydrocarbon bearing formation in response to the transmitted signals and tectonic stress in the hydrocarbon bearing formation; moving the acoustic logging tool longitudinally in the well so that signals are also transmitted and received along a length of the well; and determining, in response to the received respective signals, elastic moduli and Poisson's ratio for different directionalized sectors of the hydrocarbon bearing formation around the circumference of the well, thereby providing predictors of fracture direction in the hydrocarbon bearing formation.

In a preferred embodiment, compression, shear and Stonely wave data are obtained at six directions around the well bore and longitudinally within the well. From these data, oriented rock properties can be determined (e.g. elastic moduli and Poisson's ratio can be determined to show variations in horizontal stress and strain in the formation around the wellbore). This information can be used to predict the orientation of hydraulic fractures and other directional properties of the formation.

Two alternative preferred ways of transmitting are (1) sequentially activating a plurality of transmitters, wherein each of the transmitters is disposed at a different azimuth in the well, and (2) rotating a transmitter in the well and activating the transmitter at different azimuths.

The method can further comprise communicating out of the well data representing the received azimuthal signals and determining, in response to the communicated data, elastic moduli and Poisson's ratio for different sectors of the earthen structure or formation around the circumference of the well.

In order that the invention may be more fully understood, embodiments thereof will now be described, by way of example only, with reference to the accompanying drawings, wherein:

FIG. 1 schematically shows an embodiment of an acoustic logging tool supported on a cable in a well borehole for conducting acoustic logging operations in accordance with the method of the present invention.

FIG. 2 is a schematic diagram showing the azimuthal or angular disposition of six acoustic transmitters around the circumference of the acoustic logging tool as if viewed along line 2-2 shown in FIG.1.

FIG. 3 is a schematic diagram showing the azimuthal or angular disposition of a first set of six acoustic receivers around the circumference of the acoustic logging tool as if viewed along line 3-3 shown in FIG.1.

FIG. 4 is a schematic diagram showing the azimuthal or angular disposition of a second set of six acoustic receivers around the circumference of the acoustic logging tool as if viewed along line 4-4 shown in FIG.1.

FIG. 5 illustrates two arms, each with a respective pad containing a respective acoustic transmitter and one or more receivers, of a preferred embodiment six-arm acoustic logging tool.

FIG. 6 illustrates a preferred waveform of a signal received in the acoustic logging tool in response to an acoustic signal transmitted from the tool, which waveform contains data about compression, shear and Stonely waves produced in the surrounding formation in response to the transmitted signal.

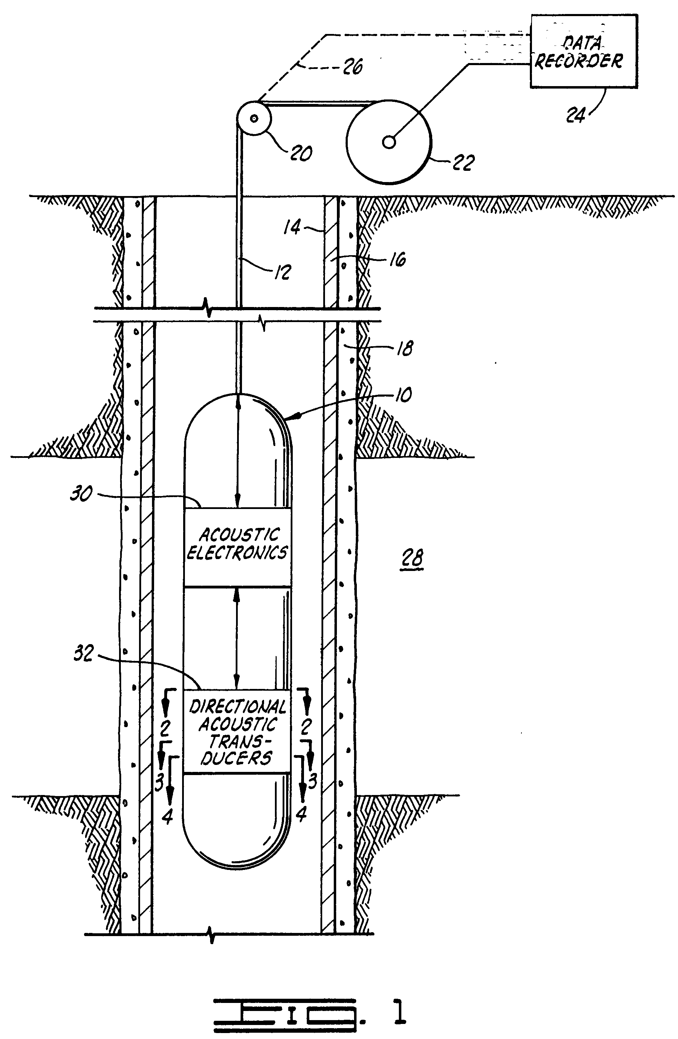

Attention is first directed to FIG. 1 of the drawings where an acoustic logging tool is indicated by the number 10. It is supported on an armored logging cable 12 in a well 14. The well 14 is cased with a casing 16, and the casing 16 is surrounded by cement 18. While a cased hole is shown, it will be understood that the present invention is applicable to open or cased hole logging with equal facility. Furthermore, while use of a logging cable is also illustrated, other techniques for moving the tool 10 into and out of the well can be used. For example, the tool 10 can be inserted as part of a drill string and used to make measurements while drilling occurs.

The armored logging cable 12 extends upwardly to a sheave 20 and is spooled on a drum 22. The drum 22 enables connection through the logging cable 12 with a data recorder system 24. The recording or log that is made from signals retrieved from the well is correlated to the position of the tool 10 in the well and to this end, a mechanical or electronic depth measuring apparatus 26 provides data from the sheave 20 to the recorder 24 to thereby enable the data to be matched with depth in the well. If a logging cable is not used, as can be the case as explained above, data can be retained in the tool 10 for use after the tool 10 is retrieved from the well or data can be communicated to the surface by any other suitable means as readily known in the art.

The data recorder 24 preferably includes a computer (not shown) for processing logging tool signals and a memory device (not shown) for retaining data. The computer is programmed to receive electrical signals over the cable 12 and to convert received signals into data signals that indicate formation characteristics. Such programming is of a type known to those skilled in the art, and specifically pertains to computing elastic moduli and Poisson's ratio as further explained below. The conversion from the downhole signals to the elastic moduli and Poisson's ratio can be accomplished by the same techniques used in the Halliburton Logging Services, Inc. Full Wave Sonic logging tool.

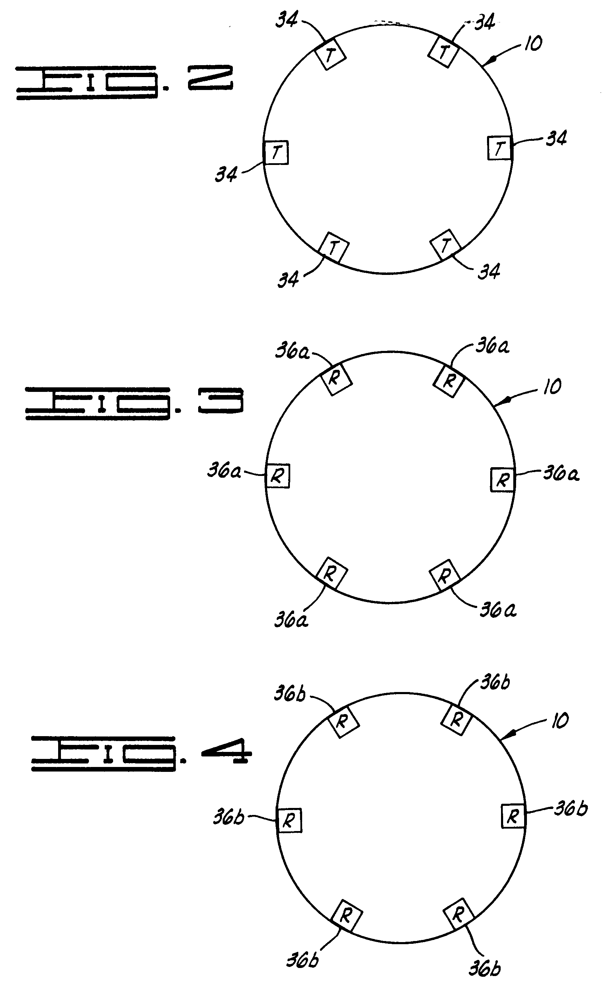

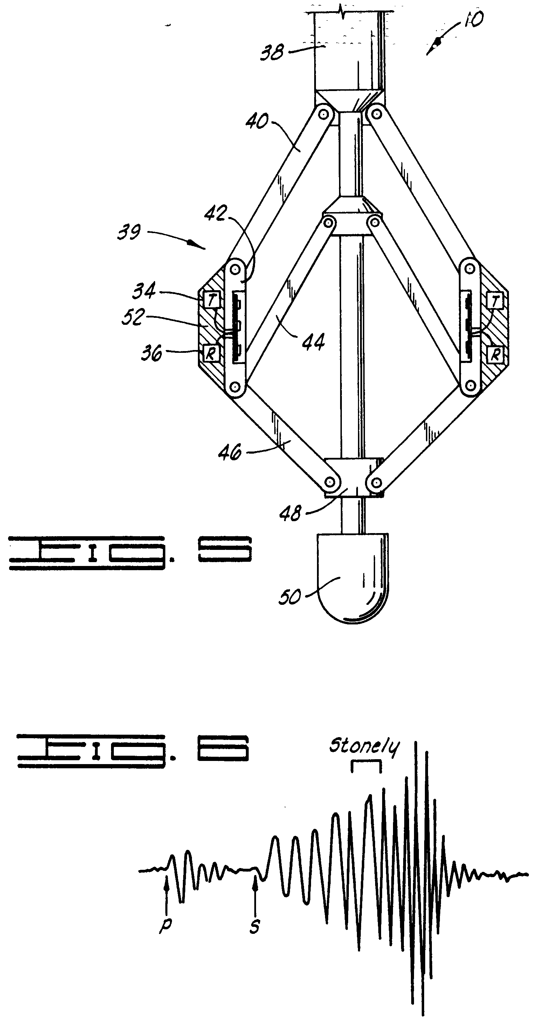

The logging tool 10 houses an electronic system 30 for operation of the equipment. The electronic system is connected with directionally oriented acoustic transducers 32 used to investigate the earthen structure, particularly a hydrocarbon-bearing formation 28 thereof, traversed by the well 14. In the preferred embodiment, six sets of transducers 32 are used. Referring to FIGS. 2-4, these sets are disposed at equal angles around the circumference of the tool 10, and each set includes at least one acoustic transmitter 34 and at least one acoustic receiver 36. Two sets of receivers 36a, 36b are shown in the drawings, but only one receiver per transmitter need be used; however, multiple receivers relative to each transmitter are preferred because these collectively provide a better picture of the full waveform responsive to the compression, shear and Stonely waves. Although the transmitters 34 are represented in FIGS. 2 and 3 as being above the receivers 36, other suitable orientations can be used.

The acoustic transmitters 34 are preferably known piezoelectric devices that convert electric energy/current into acoustic energy, and the acoustic receivers 36 are preferably known piezoelectric devices that convert acoustic energy into an electrical signal; however, it is contemplated that other types of devices can be used as known in the art.

Attention is directed to FIG. 5 of the drawings where a preferred embodiment of the acoustic logging tool 10 is represented in part. It incorporates an elongate housing or package 38 known as a sonde. The sonde preferably incorporates at the upper end of the tool an orientation device (not shown) to obtain inclination, relative bearing (orientation of the arms), and orientation and deviation of the open or cased well. The upper portion of the sonde is constructed for connection with the logging cable 12 so that the tool can be raised and lowered in the well to conduct logging activities. The housing 38 is of rugged construction to resist ambient pressures and temperatures encountered during operation.

There are measurement circuits included within the electronics section 30 that is inside the housing 38. The measurement circuits cooperate with telemetry circuits of the electronic section 30 to deliver the output signals through the logging cable 12 for transmission to the surface.

The lower portion of the tool 10 includes multiple arm assemblies. Two are shown in FIG. 5, but it will be appreciated that it is normal to use at least three, often four and preferably six as represented in FIGS. 2-4; more can be used if desired. Since they are all similar and differ only in their position on the tool 10, description of one arm assembly 39 will suffice for all the others. To this end, an arm 40 connects with a mounting plate 42. The plate 42 is held parallel to the sidewall of the housing 38. Another arm 44 assists in holding the plate 42 parallel to the sidewall. Another arm 46 is included and it connects with a slidable collar 48 near a base 50 of the tool 10.

The tool 10 depicted in FIG. 5 also includes a pad 52. It is formed of a sacrificial ceramic material. It encounters rough wear and is ultimately worn away and must be replaced when worn. It is provided with a slightly curving face so that it can slide smoothly against the wall of the well (either the casing or the borehole), keeping in mind that it is being abraded. The ceramic pad 52 has embedded therein at least one transmitter transducer 34 and at least one receiver transducer 36.

An alternative to the embodiment illustrated in FIGS. 2-5 is to use a single transducer that can be rotated in a manner similar to how a transducer is rotated in the Halliburton Logging Services, Inc. CAST logging tool (the CAST tool measures "time of flight" and amplitude -- "time of flight" is the two-way travel time for a signal to travel from the transducer, through the borehole fluid, strike the wall of the casing, and reflect back to the transducer through the borehole fluid; and the amplitude is the relative intensity of the received pulse which has been attenuated along its path). In the present invention, such a transducer would be rotated to different azimuths, at each of which an acoustic signal would be transmitted into the well and the responsive signal received at the same orientation to retain the directionality aspect of the present invention.

The previously described types of equipment can be used to perform the acoustic logging method of the present invention by which mechanical anisotropy of a hydrocarbon bearing formation traversed by a well can be detected. In doing so, the acoustic logging tool 10 is lowered into the well, such as on the logging cable 12 or as part of a drill string. Once the tool 10 is at a desired depth, acoustic signals are transmitted from the acoustic logging tool into the surrounding earthen structure. At least one phase of implementing the method, this occurs when the tool is adjacent the hydrocarbon bearing formation 28.

In accordance with the directionality feature of the present invention, which enables anisotropy to be detected, the acoustic signals are transmitted at different azimuths about the longitudinal axis of the well. Such transmission preferably includes either (1) sequentially activating a plurality of transmitters in the acoustic logging tool, wherein each of the transmitters is disposed at a different azimuth in the well as represented in FIG. 2, or (2) rotating a transmitter in the acoustic logging tool and activating the transmitter at different azimuths in the well such as is done in the CAST tool referred to above. The transmitted signal is a conventional acoustic pulse as known in the art.

The method of the present invention further comprises receiving in the acoustic logging tool 10 from the different azimuths about the longitudinal axis of the well respective signals responsive to different waves produced in the earthen structure, such as the hydrocarbon bearing formation 28, in response to the transmitted signals and tectonic stress in the structure. That is, the waves are produced by the transmitted acoustic pulse, but the nature of the waves depends on the tectonic or natural stress (as well as any induced stress) acting on the structure. In the preferred embodiment of the present invention, the different waves to which the received signals are responsive include compression (P), shear (S) and Stonely waves. These waves are referred to in United States patent specification number 4,869,349 (Minear et al.) and in Welex and Halliburton Logging Services, Inc. brochures on the Full Wave Sonic logging tool, all of which are incorporated herein by reference. A respective set of these waves can be produced in response to an acoustic signal being transmitted from one of the transmitters 34. Such a respective set of waves produces a continuous signal in the respective receiver 36. An illustration of such a signal is shown in FIG. 6 with the portions responsive to the respective waves so identified.

During an overall logging run, the acoustic logging tool 10 is moved longitudinally in the well 14 so that signals are transmitted and received along a length of the well in addition to within substantially horizontal regions of the well where the transducers 32 are located at any one time. Longitudinal movement occurs in any suitable manner, such as by reeling in the logging cable 12 on the reel 22 once the tool 10 has been lowered into the well 14.

In the preferred embodiment, data representing the received signals is communicated out of the well 14, such as over the logging cable 12, to the computer preferably in the data recorder 24. Such data can then be used to determine elastic moduli and Poisson's ratio for different sectors around the circumference of the well, thereby providing information about the mechanical anisotropy of the underground structure and specifically thereby providing predictors of fracture direction in the hydrocarbon bearing formation 28. The term "elastic moduli" includes Young's modulus, shear modulus and bulk modulus.

Young's modulus (E) can be defined as the ratio of normal stress to the resulting strain in the direction of the applied stress, and is applicable for the linear range of the material; that is, where the ratio is a constant. In an anisotropic material, Young's modulus may vary with direction. In subterranean formations, the plane of applied stress is usually defined in the horizontal plane which is roughly parallel to bedding planes in rock strata where the bedding is horizontally aligned.

Poisson's ratio ($\mu$) can be defined as the ratio of lateral strain (contraction) to the axial strain (extension) for normal stress within the elastic limit.

Young's modulus is related to shear modulus by the formula:

$$E = 2G(1 + \mu)$$

wherein:

E represents Young's modulus;

G represents shear modulus; and

$\mu$ represents Poisson's ratio.

Shear modulus can be defined as the ratio of shear stress to the resulting shear strain over the linear range of the material.

Bulk modulus is the ratio of the compressive or tensile force applied to a substance per unit surface area to the change in volume of the substance per unit volume.

The aforementioned elastic moduli are based on the elasticity of rock theory and are utilized to calculate various rock properties relating to fracturing as is well known by those skilled in the art. The term stress, as it is used herein, can be defined as the internal force per unit of cross-sectional area on which the force acts. It can be resolved into normal and shear components which are perpendicular and parallel, respectively, to the area. Strain, as it is used herein, can be defined as the deformation per unit length and is also known as "unit deformation". Shear strain can be defined as the lateral deformation per unit length and is also known as "unit detrusion". The directional elastic moduli data obtained in accordance with this invention can be utilized to verify in situ stress orientation, to verify or predict hydraulic fracture direction in the formation, and to design subsequent fracture treatments using techniques well known to those skilled in the art.

The foregoing method can be used in conjunction with prior techniques for removing a core sample from the well and analyzing it outside the well. Such prior techniques are referred to in the initial section hereof. Such conjunction still provides a method for detecting mechanical anisotropy, such as particularly of a hydrocarbon bearing formation traversed by a well. This method comprises: logging the well for determining in situ mechanical anisotropy of the hydrocarbon bearing formation such as in a manner as previously described herein; extracting a core sample from the well and determining mechanical anisotropy of the extracted core sample outside the well, such as using a previously known technique; and distinguishing natural mechanical anisotropy from induced mechanical anisotropy by comparing the determined in situ mechanical anisotropy and the determined mechanical anisotropy of the extracted core sample. Such comparison is made by comparing the various types of information obtained from the natural environment in situ test and the induced environment core test. For example, such comparison can be made by comparing the elastic moduli and Poisson's ratios generated by the respective downhole and core tests. Acoustic information for comparison can also be obtained from core tests as described, for example, in David P. Yale and Eve S. Sprunt, "Prediction of Fracture Direction Using Shear Acoustic Anisotropy", 1987 SCA Conference Paper No. 8711 and G.G. Ramos and J.J. Rathmell, "Effects of Mechanical Anistropy on Core Strain Measurements for In-Situ Stress Determination", 1989 SCA Conference Paper No. 8908, incorporated herein by reference.

Using the method of the present invention, measurements of elastic moduli can be obtained so that mechanical anisotropic characteristics of subterranean formations can be determined or predicted. Azimuthally oriented sensing of compression, shear and Stonely waves is used to provide comprehensive directional data about discrete sectors of the formation around the borehole and not merely an overall average of the entire circumferential region as occurs with omnidirectional acoustic logging. The data are preferably obtained by the present invention at a high sampling rate that accurately represents the changes in formation characteristics with depth. "High sampling rate" is a rate greater than two to four samples per foot. The number of sectors or directions monitored is preferably sufficient to obtain sufficient resolution with respect to changes in stress profile about the axis of the well. The method should enable at least compression and shear wave velocities and bulk density to be determined for each sector. Sensing is preferably done with either several angularly spaced transducers or one or more rotated transducers.

**Claims**

1. An acoustic logging method for detecting mechanical anisotropy of a hydrocarbon bearing formation traversed by a well, which method comprises lowering an acoustic logging tool (10) into the well (14); transmitting, from the acoustic logging tool (10) into the hydrocarbon bearing formation (28), respective acoustic signals at different azimuths about a longitudinal axis of the well (14); receiving in the acoustic logging tool from the different azimuths about the longitudinal axis of the well respective signals responsive to different waves produced in the hydrocarbon bearing formation (28) in response to the transmitted signals and tectonic stress in the hydrocarbon bearing formation; moving the acoustic logging tool (10) longitudinally in the well (14) so that signals are also transmitted and received along a length of the well; and determining, in response to the received respective signals, elastic moduli and Poisson's ratio for different directionalized sectors of the hydrocarbon bearing formation (28) around the circumference of the well (14), thereby providing predictors of fracture direction in the hydrocarbon bearing formation.

2. A method according to claim 1, wherein said transmitting includes sequentially activating a plurality of transmitters (34) circumferentially disposed in the acoustic logging tool (10).

3. A method according to claim 1, wherein said transmitting includes rotating a transmitter (34) in the acoustic logging tool (10) and activating the transmitter at different azimuths in the well (14).

4. A method according to claim 1, further comprising communicating out of the well data representing the received signals and determining in response to the communicated data elastic moduli and Poisson's ratio for different sectors of the hydrocarbon bearing formation (28) around the circumference of the well (14), thereby providing predictors of fracture direction in the hydrocarbon bearing formation.

5. A method according to claim 4, wherein the different waves to which the received signals are responsive include compression. shear and Stonely waves.

6. A method according to claim 4, wherein said transmitting includes sequentially activating a plurality of transmitters (34) in the acoustic logging tool (10), wherein each of the transmitters is disposed at a different azimuth in the well (14).

7. A method according to claim 4, wherein said transmitting includes rotating a transmitter (34) in the acoustic logging tool (10) and activating the transmitter at different azimuths in the well (14).

8. A method according to claim 1, wherein the different waves to which the received signals are responsive include compression, shear and Stonely waves.

9. A method according to claim 8, wherein said transmitting includes sequentially activating a plurality of transmitters (34) circumferentially disposed in the acoustic logging tool (10).

10. A method according to claim 8, wherein said transmitting includes rotating a transmitter (34) in the acoustic logging tool (10) and activating the transmitter at different azimuths in the well (14).

DATA
RECORDER

24

26

20

22

14

12

16

18

10

30

ACOUSTIC
ELECTRONICS

28

32

DIRECTIONAL
ACOUSTIC
TRANS-
DUCERS

2

2

3

3

4

4

FIG. 1

FIG. 2

34   34   34   34   34   34   10

FIG. 3

36a   36a   36a   36a   36a   36a   10

FIG. 4

36b   36b   36b   36b   36b   36b   10

FIG. 5

FIG. 6

Stonely

P    S